# EUROPÄISCHE PATENTANMELDUNG

(11) **EP 2 886 303 A1**
(43) Veröffentlichungstag der Anmeldung: **24.06.2015**
(21) Anmeldenummer: 13198914.7
(22) Anmeldetag: 20.12.2013
(51) Int. Cl.: B29C 65/18, B29C 65/26

(54) **Siegelschiene mit Heatpipe für eine Verpackungsmaschine**

(71) Anmelder: Multivac Sepp Haggenmüller GmbH & Co. KG, 87787 Wolfertschwenden (DE)
(72) Erfinder: Mößnang, Konrad, 87439 Kempten (DE)
(74) Vertreter: Grünecker Patent- und Rechtsanwälte PartG mbB

(57) **Zusammenfassung**

Die Erfindung betrifft eine Siegelschiene (5) für eine Verpackungsmaschine (1), umfassend wenigstens eine Heizeinrichtung (12), die in einem Heizsteg (11) vorgesehen ist, und eine Siegelfläche (13), die an einem Siegelsteg (10) vorgesehen ist. Dabei ist wenigstens eine Heatpipe (16) vorgesehen, wobei die Heatpipe (16) parallel zur Siegelfläche (13) ausgerichtet ist und sowohl mit dem Heizsteg (11) als auch mit dem Siegelsteg (10) in Kontakt steht, um die Wärme vom Heizsteg (11) homogen auf den Siegelsteg (10) zu übertragen.

## Beschreibung

Die Erfindung bezieht sich auf eine Siegelschiene für eine Verpackungsmaschine gemäß dem Oberbegriff des Anspruchs 1.

Es ist aus der EP 1 403 185 A1 eine Vakuum-Kammermaschine bekannt, die eine mittels einer Widerstandheizung dauerbeheizte Siegelschiene aufweist. Bei einer Widerstandsheizung kann es sich um Rohrheizkörper oder auch Heizpatronen handeln. Nachteil von Rohrheizkörpem ist, dass diese entlang ihrer Ausrichtung einen inhomogenen Temperaturverlauf aufweisen und damit beispielsweise eine ein Meter lange Siegelschiene an ihrer Siegelfläche Temperaturunterschiede von bis zu 15 Grad Celsius aufweisen können. Bei einem Einsatz einer solchen Vakuum-Kammermaschine zum Verpackung von medizinischen Produkten sind zum Teil nur Temperaturunterschiede von wenigen Grad Celsius zulässig, um über die gesamte Länge einer Siegelnaht eine sichere Siegelung aufweisen zu können.

Wärmerohre speziell in Form einer Heatpipe sind seit langem bekannt, bspw. aus der US 2,350,348, und haben ihre Einsatzgebiete beispielsweise in Notebooks zum Kühlen von Mikroprozessoren. Ein Wärmerohr ist ein Wärmeübertrager, der unter Nutzung von Verdampfungswärme eines Arbeitsmediums eine hohe Wärmestromdichte erlaubt, sodass auf vergleichsweise kleiner Querschnittsfläche große Wärmemengen transportiert werden können. Wärmerohre enthalten dabei grundsätzlich ein hermetisch gekapseltes Volumen, meist in Form eines Rohres. Dieses ist mit einem Arbeitsmedium gefüllt, das das Volumen zum Teil in flüssigem, zum Teil in dampfförmigem Zustand ausfüllt.

Aufgabe der vorliegenden Erfindung ist es, eine Siegelschiene für eine Vakuum-Kammermaschine dahingehend zu verbessern, dass die Siegelfläche eine möglichst geringe Temperaturdifferenz entlang der Siegelschiene aufweist.

Diese Aufgabe wird gelöst durch eine Siegelschiene mit den Merkmalen des Anspruchs 1. Vorteilhafte Weiterbildungen der Erfindung sind in den Unteransprüchen angegeben.

Die erfindungsgemäße Siegelschiene umfasst wenigstens eine Heizeinrichtung, die in einem Heizsteg vorgesehen ist, und eine Spiegelfläche, die an einem Siegelsteg vorgesehen ist. Die Siegelschiene zeichnet sich dadurch aus, dass wenigstens eine Heatpipe vorgesehen ist, wobei die Heatpipe parallel zur Siegelfläche ausgerichtet ist und sowohl mit dem Heizsteg als auch mit dem Siegelsteg in Kontakt steht, um die Wärme vom Heizsteg homogen auf den Siegelsteg zu übertragen. Im Sinne der Erfindung bedeutet die Formulierung "homogen", dass eine entlang der Heatpipe weitgehend gleiche Wärme an den Siegelsteg übertragen wird, also kaum Temperaturunterschiede vorliegen. Dies bringt den enormen Vorteil mit sich, dass an der Siegelfläche so geringe Temperaturunterschiede sichergestellt werden können, dass höchste Forderungen bezüglich der Siegelqualität vor allem im Medizinbereich erfüllt werden können und der konstruktive Aufwand bzw. der finanzielle Mehraufwand sehr gering ist.

Die bei der Erfindung eingesetzte Heatpipe ist konfiguriert zur Nutzung von Verdampfungswärme eines Mediums, wobei das kondensierte Medium nach dem Dochtprinzip innerhalb der Heatpipe führbar ist.

Folglich ist die Heatpipe dazu konfiguriert, die vom Heizsteg aufgenommene Wärme gleichmäßig entlang der Siegelschiene an den Siegelsteg abzugeben, um Temperaturunterschiede des Heizsteges bei der Wärmeübergabe an den Siegelsteg zu minimieren und so die Siegelfläche möglichst gleichmäßig zu erwärmen.

Dabei ist im Betrieb der Siegelschiene bevorzugt ein maximaler Temperaturunterschied an der Siegelfläche entlang der Siegelschiene von kleiner 10 °C, vorzugsweise kleiner 6 °C, vorgesehen.

In einer vorteilhaften Ausführung weist die Heatpipe eine verformbare Außenwand auf, um bei einer Montage zwischen dem Heizsteg und dem Siegelsteg sich derart anzupassen, dass jeweils eine größere Kontaktfläche zwischen der Heatpipe und dem Heizsteg und dem Siegelsteg entsteht. Dabei weist die vorgesehene Kontaktfläche, die durch den Heizsteg und den Siegelsteg gebildet wird, eine ovale Querschnittsfläche auf. Die ovale Querschnittsfläche sorgt beispielsweise bei der Montage dazu, dass die runde Querschnittsfläche bzw. die zylindrische Außenwand der Heatpipe verformt wird und sich an die ovale Form der Öffnung teilweise anlegt und somit zu einer Erhöhung der Kontaktfläche führt, und die einen guten Wärmeübergang vom Heizsteg auf die Heatpipe und von der Heatpipe auf den Siegelsteg ermöglicht.

Die Siegelschiene ist vorzugsweise mittels des Heizstegs und des separat davon gebildeten Siegelstegs zweiteilig ausgeführt, bevorzugt um eine ovale Querschnittsfläche zu ermöglichen oder um das Einbringen der Heatpipe in die Siegelschiene zu erleichtern.

Vorzugsweise sind dabei der Heizsteg und der Siegelsteg bis auf die Kontaktfläche für die die Heatpipe zueiander wärmeisolierend miteinander verbunden, um eine möglichst hohe Effizienz der Heatpipe zum Ausgleichen von Temperaturunterschieden zu erreichen.

Der Siegelsteg weist bevorzugt eine im Wesentlichen T-förmige Querschnittsfläche auf, um eine einfache Montage zu ermöglichen.

Die Heatpipe weist einen Außendurchmesser von 6 bis 20 mm, vorzugsweise von 8 bis 12 mm, auf.

Vorzugsweise ist die Heatpipe für einen Temperaturbereich (Arbeitsbereich) von 60 °C bis 200 °C, bevorzugt 80 °C bis 150°C, konfiguriert, um besonders gut geeignet für die Anwendung in einer Siegelschiene zum Siegeln von Kunststoffbeuteln zu sein.

Die Heatpipe erstreckt sich vorzugsweise über die gesamte Länge der Siegelschiene.

Bevorzugt ist die Heatpipe in eine Öffnung in der Siegelschiene einführbar.

In einer bevorzugten Ausführung weist die Heatpipe zwei oder mehr Wärmerohrabschnitte auf, um vor allem bei langen Siegelschienen günstige Standardlängen von Wärmerohren einsetzen zu können. Gemäß der Erfindung handelt es sich um eine lange Siegelschiene, wenn diese eine Länge von 500 mm oder mehr aufweist, vorzugsweise von 600 mm bis 1000 mm.

Die erfindungsgemäße Vakuum-Kammermaschine weist eine oben beschriebene erfindungsgemäße Siegelschiene auf, um medizinische Produkte in einem Beutel zu evakuieren und zu versiegeln, wobei die für den Medizinbereich geltenden, strengeren Vorgaben bezüglich der Temperaturunterschiede entlang der Siegelschiene eingehalten werden.

Im Folgenden wird ein vorteilhaftes Ausführungsbeispiel der Erfindung anhand einer Zeichnung näher erläutert. Im Einzelnen zeigen:
- Fig. 1: eine Vakuum-Kammermaschine mit einer erfindungsgemäßen Siegelschiene und
- Fig. 2: eine erfindungsgemäße Siegelschiene in einer Schnittdarstellung,
- Fig.3: eine alternative Ausführungsform der Siegelschiene in einer Schnittdarstellung und
- Fig. 4: eine Heatpipe in einer Längsschnittdarstellung.

Gleiche Komponenten sind in den Figuren durchgängig mit gleichen Bezugszeichen versehen.

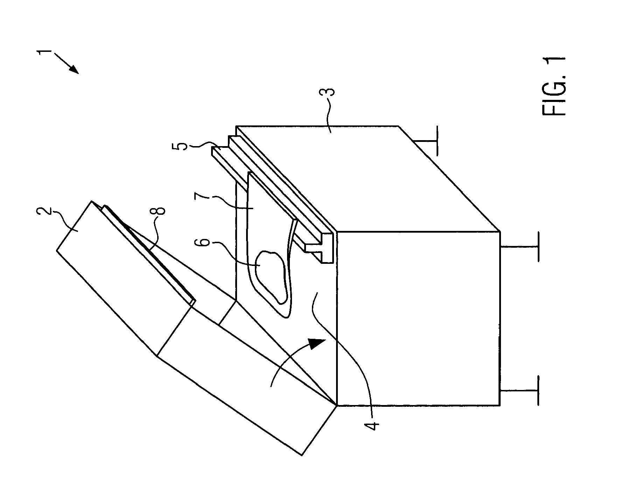

Figur 1 zeigt eine geöffnete Verpackungsmaschine in Form einer Vakuum-Kammermaschine 1 mit einem Kammerdeckel 2, einem Gestell 3, einem Kammerboden 4 und einer Siegelschiene 5. Zum Vakuumverpacken eines Produkts 6 wird dieses in einen Kunststoffbeutel 7 eingefüllt und der Kunststoffbeutel 7 wird wie gezeigt in der Vakuum-Kammermaschine 1 auf den Kammerboden 4 gelegt, so dass der offene und noch zu versiegelnde Bereich des Kunststoffbeutels 7 auf der Siegelschiene 5 aufliegt bzw. sich darüber befindet. Nach dem Schließen des Kammerdeckels 2 in Pfeilrichtung kann das Innere der so gebildeten Kammer evakuiert werden und anschließend drückt eine im Kammerdeckel 2 vorgesehene obere Siegelschiene 8 den Kunststoffbeutel 7 während des Siegelvorgangs gegen die Siegelschiene 5. Die obere Siegelschiene 8 im Kammerdeckel 2 kann lediglich eine Gegendruckleiste sein, es kann sich aber auch um eine beheizte, vorzugsweise dauerbeheizte Siegelschiene handeln. Die untere Siegelschiene 5 ist als dauerbeheizte Siegelschiene ausgeführt.

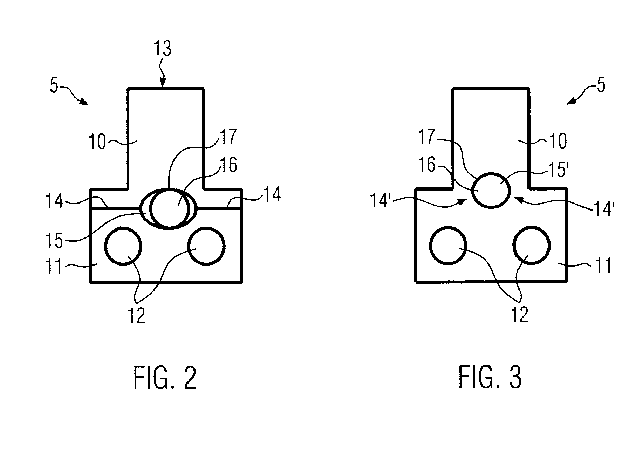

Figur 2 zeigt eine Schnittansicht der Siegelschiene 5. Die Siegelschiene 5 lässt sich in einen oberen Bereich, nämlich einen Siegelsteg 10, und in einen unteren Bereich, nämlich einen Heizsteg 11, funktionell unterteilen. Dabei kann die Siegelschiene 5 einteilig oder mehrteilig ausgeführt sein. Die einteilige Ausführung wird in Figur 3 näher erläutert. Die zweiteilige Ausführungsvariante in Figur 2 zeigt eine Heizeinrichtung 12, die aus ein oder mehreren Heizelementen, beispielsweise bekannten Rohrheizkörpern, bestehen kann, die sich entlang des Verlaufs der Siegelschiene 5 erstrecken, um entlang des gesamten Heizstegs 11 Wärme einzubringen. Der Siegelsteg 10 weist an seiner Oberseite eine Siegelfläche 13 auf, die mittels der Heizeinrichtung 12 auf eine für den Kunststoffbeutel 7 geeignete Siegeltemperatur erwärmt werden soll. Diese Temperatur liegt hierbei zwischen 60 und 200 °C.

Die Heizelemente 12 weisen keine ausreichend homogene Wärmeverteilung auf, so dass entlang der Siegelschiene 5 am Übergang vom Heizsteg 11 zum Siegelsteg 10 zu große Temperaturunterschiede vorhanden sind. Um diese Temperaturunterschiede zu minimieren, sind der Siegelsteg 10 und der Heizsteg 11 in den seitlichen Randbereichen 14 thermisch isoliert, also nicht oder nur gering wärmeleitend miteinander mittels bekannter und nicht näher dargestellter Verbindungselemente verbunden und montierbar. Im mittleren Bereich dieses Überganges ist eine Öffnung 15 vorgesehen, in der eine Heatpipe 16 vorgesehen ist. Bei der Montage des Siegelstegs 10 mit dem Heizsteg 11 wird die Heatpipe 16 geklemmt, wobei sich dabei die Außenwand 17 der Heatpipe 16 verformt und sich damit wenigstens teilweise flächig sowohl an den Heizsteg 11 als auch an den Siegelsteg 10 anlegt, so dass ein guter Kontakt und ein guter Wärmeübergang entsteht.

Im Folgenden wird die Wirkweise bzw. der Einfluss der Heatpipe 16 näher beschrieben. Bei der Heatpipe 16 wird die Wärme über die mit dem Heizsteg 11 in Kontakt stehende Fläche der Außenwand 17 entlang der Länge der Siegelschiene 5 von der Heatpipe 16 aufgenommen. Innerhalb der Heatpipe 16 sorgt ein Medium 20, das unter Nutzung von Verdampfungswärme arbeitet, wobei das kondensierte Medium 20 nach dem Dochtprinzip innerhalb der Heatpipe führbar ist, für einen Wärmeausgleich entlang der Längsausrichtung des der Heatpipe 16. Die Heatpipe 16 verläuft parallel zur Siegelfläche 13. Dies führt dazu, dass die mit dem Siegelsteg 10 in Kontakt stehende Fläche der Außenwand 17 mit einer homogeneren Wärmeverteilung erwärmt wird. Dies führt an der Siegelfläche 13 in der Längsausrichtung zu einem weitgehenden Ausgleich von Temperaturunterschieden.

Figur 3 zeigt eine Variante der Siegelschiene 5, bei der der Siegelsteg 10 und der Heizsteg 11 gemeinsam einteilig, beispielsweise als eine Aluminiumschiene, ausgeführt sind. Wie bei Figur 2 ist die Heizeirichtung 12 im unteren Bereich des Heizstegs 11 vorgesehen. Die Öffnung 15' ist als Langlochbohrung in der Siegelschiene 5 vorgesehen und die Heatpipe 16 wird bei der Montage in die Öffnung 15' eingeführt und kann bei passender Toleranz von Öffnung 15' zur Auswand 17 der Heatpipe 16 einen weitestgehend vollflächigen Kontakt erzeugen. Bei dieser Ausführung findet nicht nur über die Heatpipe 16, sondern auch in den benachbarten Bereichen 14' ein Wärmeübergang vom Heizsteg 11 auf den Siegelsteg 11 statt.

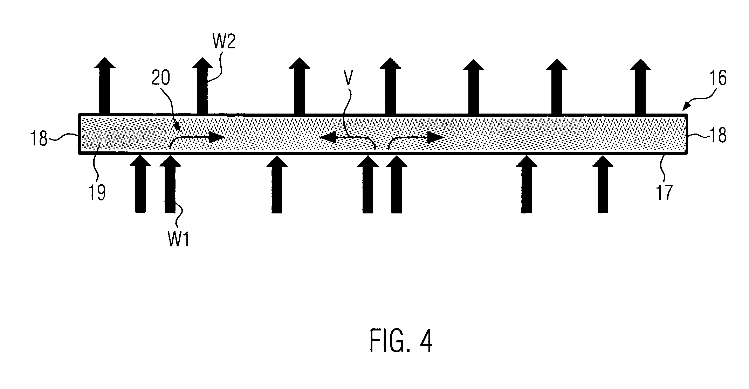

Anhand der Fig. 4 soll das Wirkprinzip der Heatpipe 16 erläutert werden. Die Heatpipe 16 weist an ihrer Außenwand 17 und an beiden Enden jeweils einen Deckel 18 auf, so dass ein hermetisch geschlossener zylinderförmiger Korpus vorliegt. Im Inneren befindet sich eine Kapillarstruktur bzw. ein dochtartiges Material 19 und ein Medium 20, welches verdampfbar und kondensierbar ist. Die in Figur. 4 von unten zugeführte Wärmeenergie W1 kann durch Heizpatronen oder Rohrheizkörper 12 erzeugt werden. Die unterschiedlichen seitlichen Abstände zwischen den nach oben an die Heatpipe 16 gerichteten Pfeile stellen eine bezogen auf die Heatpipe 16 ungleichmäßige Verteilung der eingeleiteten Wärmeenergie W1 dar. Die Wärmeenergie W1 führt in der Heatpipe 16 zu unterschiedlichen physikalischen Zuständen des Mediums 20, welches Ammoniak oder im einfachsten Fall auch Wasser sein kann. Es kann sich dabei je nach Temperatur und Medium um unterschiedliche Verdampfungs- und Kondensationsgrade handeln. Mittels des dochtartigen Materials 19 tritt eine Verteilung V und somit ein Ausgleich der Wärmeenergie entlang der Ausrichtung der Heatpipe 16 auf, da sich das Medium 20 entsprechend seines Zustands selbständig innerhalb bzw. entlang des dochtartigen Materials 19 verteilt und somit eine Wärmeverteilung auftritt. Dies hat zur Folge, dass auf der oberen bzw. der entgegengesetzten Seite der Heatpipe 16 eine gleichmäßige Verteilung der abgegebenen Wärmeenergie W2 auftritt, welches durch gleichmäßige Abstände zwischen den nach oben und von der Heatpipe 16 weg gerichteten Pfeile dargestellt ist. Dies entspricht einer homogenen Verteilung der Wärme entlang der oberen Seite der Heatpipe 16. Die Heatpipe 16 wirkt folglich als Homogenisator für die in den Siegelsteg 10 eingeleitete Wärme.

Unter die Erfindung fällt auch eine vorteilhafte Ausführung, bei der die Heatpipe 16 derart in eine Siegelschiene 5 gemäß Fig. 3 integriert ist, dass dabei die Außenwand 17 bereits Teil der Siegelschiene 5 bzw. des Siegelstegs 10 und des Heizstegs 11 ist. Das dochtförmige Material 19 und das Medium 20, wie in Fig. 4 beschrieben, sind dabei direkt in die Siegelschiene 5 integriert.

Erfindungsgemäß muss die Siegelschiene nicht zwangsweise als geradförmiger Balken ausgeführt sein. Es ist auch eine geschlossene kreisförmige Form denkbar, um in einer Siegelstation einer Schalenverschließmaschine oder einer Tiefziehverpackungsmaschine einsetzbar zu sein, um luftdichte umlaufende Siegelnähte erzeugen zu können. Hierbei sind sämtliche Formen denkbar.

## Patentansprüche

1. Siegelschiene (5) für eine Verpackungsmaschine (1), umfassend wenigstens eine Heizeinrichtung (12), die in einem Heizsteg (11) vorgesehen ist, und eine Siegelfläche (13), die an einem Siegelsteg (10) vorgesehen ist, **dadurch gekennzeichnet, dass** wenigstens eine Heatpipe (16) vorgesehen ist, wobei die Heatpipe (16) parallel zur Siegelfläche (13) ausgerichtet ist und sowohl mit dem Heizsteg (11) als auch mit dem Siegelsteg (10) in Kontakt steht, um die Wärme vom Heizsteg (11) homogen auf den Siegelsteg (10) zu übertragen.

2. Siegelschiene nach Anspruch 1, **dadurch gekennzeichnet, dass** im Betrieb der Siegelschiene (5) ein maximaler Temperaturunterschied an der Siegelfläche (13) entlang der Siegelschiene (5) von kleiner 10 °C, vorzugsweise kleiner 6 °C, vorgesehen ist.

3. Siegelschiene nach einem der vorangehenden Ansprüche, **dadurch gekennzeichnet, dass** die Heatpipe (16) eine verformbare Außenwand (17) aufweist.

4. Siegelschiene nach Anspruch 3, **dadurch gekennzeichnet, dass** die Heatpipe (16) zwischen dem Heizsteg (11) und dem Siegelsteg (10) unter Verformung der Außenwand (17) montierbar ist.

5. Siegelschiene nach Anspruch 3 oder 4, **dadurch gekennzeichnet, dass** eine Kontaktfläche, die durch den Heizsteg (11) und den Siegelsteg (10) gebildet wird, eine ovale Querschnittsfläche (15) aufweist.

6. Siegelschiene nach einem der vorangehenden Ansprüche, **dadurch gekennzeiichnet,** dass der Heizsteg (11) und der Siegelsteg (10) getrennt ausgeführt sind.

7. Siegelschiene nach Anspruch 6, **dadurch gekennzeichnet, dass** der Heizsteg (11) und der Siegelsteg (10) bis auf die Kontaktfläche für die Heatpipe (16) zueinander wärmeisolierend miteinander verbunden sind.

8. Siegelschiene nach einem der vorangehenden Ansprüche, **dadurch gekennzeichnet, dass** der Siegelsteg (10) eine im Wesentlichen T-förmige Querschnittsfläche aufweist.

9. Siegelschiene nach einem der vorangehenden Ansprüche, **dadurch gekennzeichnet, dass** die Heatpipe (16) für einen Temperaturbereich von 60 °C bis 200 °C, vorzugsweise 80 °C bis 150°C, konfiguriert ist.

10. Siegelschiene nach einem der vorangehenden Ansprüche, **dadurch gekennzeichnet, dass** die Heatpipe (16) sich über die gesamte Länge der Siegelschiene (5) erstreckt.

11. Siegelschiene nach einem der Ansprüche 1 bis 9, **dadurch gekennzeichnet, dass** die Heatpipe (16) zwei oder mehr Heatpipeabschnitte aufweist.

12. Vakuum-Kammermaschine (1) mit einer Siegelschiene (5) gemäß einem der vorangehenden Ansprüche.
